# EUROPEAN PATENT APPLICATION

(11) **EP 2 851 789 A1**
(43) Date of publication of application: **25.03.2015**
(21) Application number: 13809008.9
(22) Date of filing: 17.01.2013
(51) Int. Cl.: G06F 9/44

(54) **METHOD AND APPARATUS FOR DETERMINING USER INTERFACE**

(30) Priority: 27.06.2012 CN 201210214232
(71) Applicant: Huawei Technologies Co., Ltd., Longgang District Shenzhen, Guangdong 518129 (CN)
(72) Inventor: HUANG, Bo, Shenzhen Guangdong 518129 (CN); REN, Yanmeng, Shenzhen Guangdong 518129 (CN)
(74) Representative: Pfenning, Meinig & Partner GbR
(86) International application number: PCT/CN2013/070576
(87) International publication number: WO 2014/000436

(57) **Abstract**

Embodiments of the present invention provide a method and an apparatus for determining a user interface, which can ensure that a user interface is applicable to a terminal device, and meets a differentiation requirement of the terminal device on a user interface presentation form. The method includes: receiving terminal information sent by a terminal device, where the terminal information includes terminal capability information, and the terminal capability information is used to indicate a presentation form of the user interface that can be supported by the terminal device; determining a first user interface according to the terminal information, so that a presentation form of the first user interface corresponds to the terminal capability information; and sending the first user interface to the terminal device. According to the method and the apparatus for determining a user interface in the embodiments of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

## Description

### TECHNICAL FIELD

The present invention relates to the multimedia field, and in particular, to a method and an apparatus for determining a user interface.

### BACKGROUND

In a current digital home field, people use more consumer electronic devices. However, operating and interacting manners of different consumer electronic devices are different, and people need to be familiar with various device operating manners in order to use these devices. Therefore, the following technical solution is proposed, that is, a server is disposed at home, so that the server delivers a same user interface to these terminal devices. In this way, a user views a same user interface on different terminal devices.

However, in the foregoing technical solution, it is required that these different devices have a similar processing capability in order to push a same user interface to different devices. As a result, a requirement for pushing different user interfaces to devices with different processing capabilities according to requirements cannot be met. For example, a user interface for watching a video television program needs to be presented on a television set for a user, and a user interface for playing music needs to be presented on a sound box for the user. Because the television set and the sound box have different processing capabilities, this requirement cannot be met by using the prior art.

### SUMMARY

Embodiments of the present invention provide a method and an apparatus for determining a user interface, which can ensure that a user interface is applicable to a terminal device, and meets a differentiation requirement of the terminal device on a user interface presentation form.

According to a first aspect, a method for determining a user interface is provided, and the method includes: receiving terminal information sent by a terminal device, where the terminal information includes terminal capability information, and the terminal capability information is used to indicate a presentation form of the user interface that can be supported by the terminal device; determining a first user interface according to the terminal information, so that a presentation form of the first user interface corresponds to the terminal capability information; and sending the first user interface to the terminal device.

In a possible implementation manner, the terminal information further includes terminal usage information and/or user rights information, where the terminal usage information is used to indicate a media type of a media resource that can be presented by the terminal device, and the user rights information is used to indicate user rights of a user who uses the terminal device; and the determining a first user interface according to the terminal information specifically includes: determining the first user interface according to the terminal information, so that resource information displayed in the first user interface corresponds to the terminal usage information and/or the user rights information, where the resource information is used to indicate a media resource for the user to use.

With reference to the first aspect and a first possible implementation manner, in a second possible implementation manner, the method further includes: receiving user operation information sent by the terminal device, where the user operation information is used to indicate an operation that is performed on the first user interface by the user who uses the terminal device; determining a second user interface according to the user operation information and the terminal information; and sending the second user interface to the terminal device.

With reference to the first aspect, the first possible implementation manner, and the second possible implementation manner, in a third possible implementation manner, the user operation information includes touch operation information and/or user rights change information, where the touch operation information is used to indicate a touch operation that is performed by the user on the terminal device that presents the first user interface, and the user rights change information is used to indicate changed user rights; and the determining a second user interface according to the user operation information and the terminal information specifically includes: determining, according to the touch operation information, the operation that is performed by the user on the first user interface; determining the second user interface according to the operation that is performed by the user on the first user interface; and/or determining the second user interface according to the user rights change information, so that resource information displayed in the second user interface corresponds to changed user rights information, where the resource information is used to indicate a media resource for the user to use.

According to a second aspect, a method for determining a user interface is provided, and the method includes: sending terminal information to a server-side device, where the terminal information includes terminal capability information, and the terminal capability information is used to indicate a presentation form of the user interface that can be supported by a terminal device; and receiving a first user interface sent by the server-side device, where the first user interface is determined by the server-side device according to the terminal information, and the presentation form corresponds to the terminal capability information.

In a possible implementation manner, the terminal information further includes terminal usage information and/or user rights information, where the terminal usage information is used to indicate a media type of a media resource that can be presented by the terminal device, and the user rights information is used to indicate rights of a user who uses the terminal device; and the receiving a first user interface sent by the server-side device includes: receiving the first user interface sent by the server-side device, where resource information of the first user interface corresponds to the terminal usage information and/or the user rights information, where the resource information is used to indicate a media resource for the user to use.

With reference to the second aspect and a first possible implementation manner, in a second possible implementation manner, the method further includes: acquiring user operation information, where the user operation information is used to indicate an operation that is performed on the first user interface by the user who uses the terminal device; sending the user operation information to the server-side device; and receiving a second user interface sent by the server-side device, where the second user interface is determined by the server-side device according to the user operation information and the terminal information.

With reference to the first aspect, the first possible implementation manner, and the second possible implementation manner, in a third possible implementation manner, the user operation information includes touch operation information and/or user rights change information, where the touch operation information is used to indicate a touch operation that is performed by the user on the terminal device that presents the first user interface, and the user rights change information is used to indicate changed user rights.

According to a third aspect, an apparatus for determining a user interface is provided, and the apparatus includes: a receiving unit, configured to receive terminal information sent by a terminal device, where the terminal information includes terminal capability information, and the terminal capability information is used to indicate a presentation form of the user interface that can be supported by the terminal device; and transmit the terminal information to a processing unit; the processing unit, configured to acquire the terminal information from the receiving unit; determine a first user interface according to the terminal information, so that a presentation form of the first user interface corresponds to the terminal capability information; and transmit the first user interface to a sending unit; and the sending unit, configured to acquire the first user interface from the processing unit, and send the first user interface to the terminal device.

In a possible implementation manner, the terminal information further includes terminal usage information and/or user rights information, where the terminal usage information is used to indicate a media type of a media resource that can be presented by the terminal device, and the user rights information is used to indicate user rights of a user who uses the terminal device; and the processing unit is further configured to determine the first user interface according to the terminal information, so that resource information displayed in the first user interface corresponds to the terminal usage information and/or the user rights information, where the resource information is used to indicate a media resource for the user to use.

With reference to the third aspect and a first possible implementation manner, in a second possible implementation manner, the receiving unit is further configured to receive user operation information sent by the terminal device, where the user operation information is used to indicate an operation that is performed on the first user interface by the user who uses the terminal device; the processing unit is further configured to determine a second user interface according to the user operation information and the terminal information; and the sending unit is further configured to send the second user interface to the terminal device.

With reference to the first aspect, the first possible implementation manner, and the second possible implementation manner, in a third possible implementation manner, the user operation information includes touch operation information and/or user rights change information, where the touch operation information is used to indicate a touch operation that is performed by the user on the terminal device that presents the first user interface, and the user rights change information is used to indicate a changed user rights; and the processing unit is further configured to determine, according to the touch operation information, the operation that is performed by the user on the first user interface; and/or configured to determine the second user interface according to the user rights change information, so that resource information displayed in the second user interface corresponds to changed user rights information, where the resource information is used to indicate a media resource for the user to use.

According to a fourth aspect, an apparatus for determining a user interface is provided, and the apparatus includes: a sending unit, configured to send terminal information to a server-side device, where the terminal information includes terminal capability information, and the terminal capability information is used to indicate a presentation form of the user interface that can be supported by a terminal device; and a receiving unit, configured to receive a first user interface sent by the server-side device, where the first user interface is determined by the server-side device according to the terminal information sent by the sending unit, and the presentation form corresponds to the terminal capability information.

In a possible implementation manner, the terminal information sent by the sending unit further includes terminal usage information and/or user rights information, where the terminal usage information is used to indicate a media type of a media resource that can be presented by the terminal device, and the user rights information is used to indicate rights of a user who uses the terminal device; and resource information of the first user interface that is received by the receiving unit corresponds to the terminal usage information and/or the user rights information, where the resource information is used to indicate a media resource for the user to use.

With reference to the fourth aspect and a first possible implementation manner, in a second possible implementation manner, the apparatus further includes: a processing unit, configured to acquire user operation information, where the user operation information is used to indicate an operation that is performed on the first user interface by the user who uses the terminal device; and transmit the user operation information to the sending unit, where the sending unit is further configured to acquire the user operation information from the processing unit, and send the user operation information to the server-side device; and the receiving unit is further configured to receive a second user interface sent by the server-side device, where the second user interface is determined by the server-side device according to the user operation information and the terminal information that are sent by the sending unit.

With reference to the first aspect, the first possible implementation manner, and the second possible implementation manner, in a third possible implementation manner, the user operation information acquired by the processing unit includes touch operation information and/or user rights change information, where the touch operation information is used to indicate a touch operation that is performed by the user on the terminal device that presents the first user interface, and the user rights change information is used to indicate changed user rights.

According to the method and the apparatus for determining a user interface in the embodiments of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for determining a user interface according to an embodiment of the present invention;
FIG. 2 is an interaction diagram of a method for determining a user interface according to an embodiment of the present invention;
FIG. 3 is a schematic flowchart of a method for determining a user interface according to another embodiment of the present invention;
FIG. 4 is a schematic block diagram of an apparatus for determining a user interface according to an embodiment of the present invention; and
FIG. 5 is a schematic block diagram of an apparatus for determining a user interface according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

As an example instead of a limitation, in the embodiments of the present invention, a terminal device may be a multimedia electronic device that is disposed in an environment such as a home or an office, for example, a television set, a sound box, or an electronic photo frame. A related function may be implemented according to an operation (for example, a gesture operation, a touch operation, a remote controller operation, or a voice operation) of a user (user).

A server-side device may be connected to a terminal device in a wired or wireless manner to transmit information and data, and can provide a user operation interface (hereinafter referred to as user interface) for the terminal device, so that a user performs an operation on the terminal device.

In addition, in the embodiments of the present invention, a user interface may have multiple presentation forms, for example, a video form user interface, an audio form user interface, an image form user interface, and a text form user interface. It should be understood that, the user interfaces of various forms listed above are only an embodiment of the present invention and the present invention is not limited thereto. All other user interfaces on which a user can perform an operation shall fall within the protection scope of the present invention.

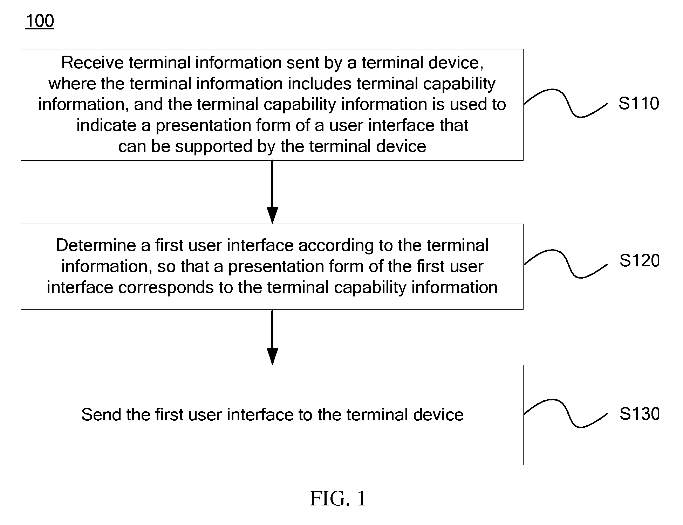

FIG. 1 is a schematic flowchart of a method 100 for determining a user interface according to an embodiment of the present invention from a perspective of a server-side device. As shown in FIG. 1, the method 100 includes:
S110: Receive terminal information sent by a terminal device, where the terminal information includes terminal capability information, and the terminal capability information is used to indicate a presentation form of the user interface that can be supported by the terminal device.
S120: Determine a first user interface according to the terminal information, so that a presentation form of the first user interface corresponds to the terminal capability information.
S130: Send the first user interface to the terminal device.

Specifically, in this embodiment of the present invention, a terminal device may be classified in advance in terms of a hardware presentation capability of a user interface. As an example instead of a limitation, the terminal device may be classified into multiple terminal types, that is, a device supporting video playback, a device supporting audio output, a device supporting image browsing, a device supporting text display, and the like. It may be specified that a different user interface presentation form is separately used for a different terminal type. For example, because a television set can play a video, the television set may be classified into the device supporting video playback, so as to determine that the television set supports a video form user interface. Furthermore, because the television set can also play audio, the television set may also be classified into the device supporting audio output, so as to determine that the television set supports a user interface (a voice prompt) of an audio form. Moreover, because the television set can also display an image, the television set may also be classified into the device supporting image browsing, so as to determine that the television set supports a user interface (a conventional user interface) of an image form. For another example, because a sound box can play audio, the sound box may also be classified into the device supporting audio output, so as to determine that the sound box supports a user interface (a voice prompt) of an audio form. In addition, if the sound box is equipped with a display screen such as liquid crystal or a light-emitting diode (LED, Light-Emitting Diode), the sound box can display text. Therefore, the sound box may also be classified into the device supporting text display, so as to determine that the sound box supports a user interface (displayed on a dot matrix or segment code LED) of a text form.

That is, in this embodiment of the present invention, according to a hardware presentation capability of a terminal device, the terminal device may be classified into one of or a combination of multiple of the following terminal types: a device supporting video playback, a device supporting audio output, a device supporting image browsing, a device supporting text display, and the like.

Accordingly, a user interface of multiple presentation forms may be set in advance, for example, a video form user interface (used by the device supporting video playback), an audio form user interface (used by the device supporting audio output), an image form user interface (used by the device supporting image browsing), and a text form user interface (used by the device supporting text display).

It should be understood that, in this embodiment of the present invention, a terminal device may be classified into one terminal type, and may also be classified into multiple device types, as long as the terminal device can indicate a user interface presentation form that is used by the terminal type, which is not limited in the present invention. Furthermore, for a terminal device that is classified into multiple device types, an appropriate user interface presentation form may be selected according user preference. In addition, each of the terminal types listed above is only an embodiment of the present invention, and the present invention is not limited thereto.

Therefore, after a server-side device and a terminal device are started, a device discovery service may be enabled, so that the terminal device can search for a list of available server-side devices. The terminal device may select a server-side device from the foregoing list of server-side devices, and establish a connection path to the server-side device. After the connection path is established, in S110, the terminal device may send, to the server-side device, the terminal capability information that is used to indicate a type (a device supporting video playback, a device supporting audio output, a device supporting image browsing, a device supporting text display, and the like) to which the terminal device belongs. Then, the server-side device may generate a user interface that corresponds to a user interface presentation form that can be supported by the terminal device and corresponds to a display specification in a case of the user interface presentation form.

Moreover, optionally, the server-side device may further query a display specification of the terminal device in a case of the user interface presentation form, for example, a format, resolution, and a frame rate of a video; a format and display resolution of an image; English, Chinese, and the like that are supported by text; and a format and a code rate of audio. It should be understood that, each of parameters listed above as display specifications is only an embodiment of the present invention, and the present invention is not limited thereto.

Optionally, in this embodiment of the present invention, the terminal information further includes terminal usage information and/or user rights information, where the terminal usage information is used to indicate a media type of a media resource that can be presented by the terminal device, and the user rights information is used to indicate user rights of a user who uses the terminal device; and
the determining a first user interface according to the terminal information specifically includes:
determining the first user interface according to the terminal information, so that resource information displayed in the first user interface corresponds to the terminal usage information and/or the user rights information, where the resource information is used to indicate a media resource for the user to use.

Specifically, in this embodiment of the present invention, a terminal device may be classified in advance in terms of service usage. As an example instead of a limitation, the terminal device may be classified into multiple service usages, that is, the terminal device is used for audio playback, used for video playback, used for text reading, used for image browsing, and the like. It may be specified that a different media resource is separately used for a different service usage. For example, because a television set can play a video, it may be determined that the television set is used for video playback, and then a video type media resource (information about the resource is indicated in a user interface) may be provided for the television set. Furthermore, because the television set can also play audio, it may also be determined that the television set is used for audio playback, and then an audio type media resource (information about the resource is indicated in a user interface) may be provided for the television set. Moreover, because the television set can also display an image, it may also be determined that the television set is used for image browsing, and then an image type media resource (information about the resource is indicated in a user interface) may be provided for the television set. For another example, because a sound box can play audio, it may also be determined that the sound box is used for audio playback, and then an audio type media resource (information about the resource is indicated in a user interface) may be provided for the sound box.

Moreover, in this embodiment of the present invention, a media resource in a server may be classified according to user setting and based on user rights, so that a different user can view different content (displayed in a user interface) after login. For example, a host may classify a media resource in a server-side device into private content and open content. In this way, when a guest pays a visit and logs in, by using a guest identity (rights), to a terminal device in a home of the host to browse content in the server-side device, only the open content may be indicated in a user interface. When the host logs in, by using a host identity (rights), to the terminal device to browse the content in the server-side device, the private content and the open content may be indicated in the user interface. That is, if rights of a user who logs in to the terminal device is different, a user interface determined by the server-side device is also different, different user interface operation rights (for example, only read-only operation rights is provided for a guest identity) and browsing rights (for example, only open content browsing rights is provided for the guest identity) are assigned.

According to the method for determining a user interface in this embodiment of the present invention, by using a media type of a media resource that can be presented by a terminal device, it can be ensured that a media resource indicated by the user interface can be used in the terminal device, thereby improving user experience. Moreover, by determining the user interface according to user rights of a user who uses the terminal device, a resource on a server-side device can be shared, and meanwhile data security and privacy of the user can be ensured.

Therefore, the terminal device may also send the terminal usage information and/or the user rights information to the server-side device, where the terminal usage information is used to indicate a media type of a media resource that can be presented by the terminal device, and the user rights information is used to indicate rights of a user who uses the terminal device. In S110, the server-side device receives the terminal usage information and/or the user rights information.

In S120, the server-side device selects, according to a terminal type to which the terminal device belongs, a user interface presentation form that is applicable to the terminal device. And, the server-side device may perform classification search according to the terminal usage information and/or the user rights information, list a media resource that is provided for the terminal device for playback, and generate a user interface that indicates information about the media resource.

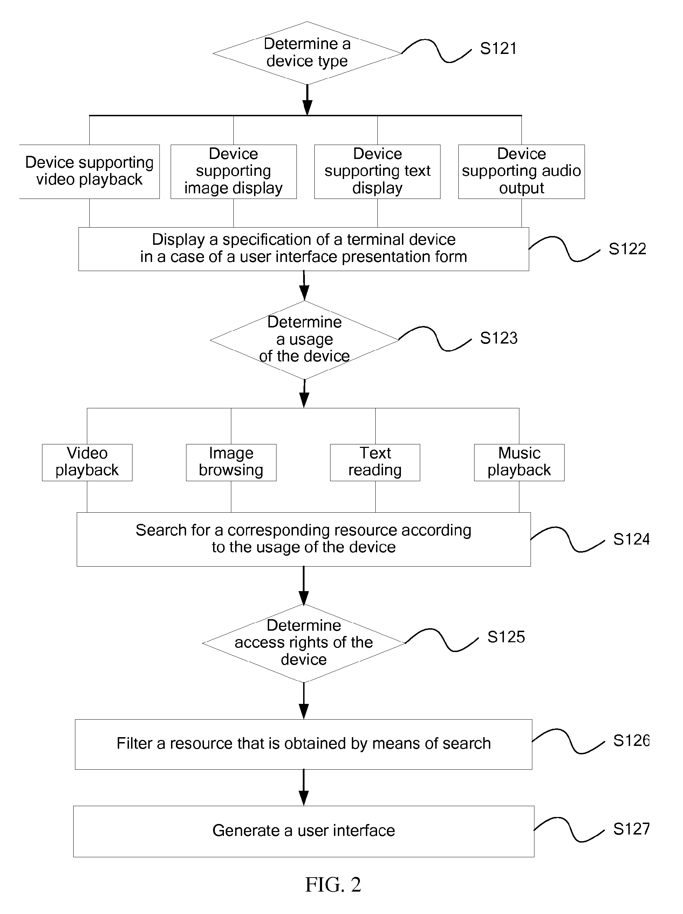

That is, as shown in FIG. 2, in S121, the server-side device may determine, according to terminal capability information reported by the terminal device, a type of the terminal device, and classify the terminal device into a device supporting video playback, a device supporting audio output, a device supporting image browsing, a device supporting text display, or the like.

In S122, the server-side device may further query (for example, by means of automatic report by the terminal device, by means of a report instruction sent to the terminal device, or the like) a display specification of the terminal device in a case of the user interface presentation form, for example, a format, resolution, and a frame rate of a video; a format and display resolution of an image; English, Chinese, and the like that are supported by text; and a format and a code rate of audio.

In S123, the server-side device may determine, according to the terminal usage information reported by the terminal device, a usage of the terminal device, and determine that the terminal device is used for audio playback, used for video playback, used for text reading, used for image browsing, or the like.

In S124, the server-side device may search for, according to the usage of the terminal device, a resource that can be used by the terminal device.

In S125, the server-side device may determine, according to user rights information reported by the terminal device, user rights of a user who uses the terminal device, and determine whether the user who uses the terminal device is a host or a guest.

In S126, the server-side device may filter, according to the user rights of the user who uses the terminal device, a resource that is found by means of search in S124 (device access rights is set by a server side, and a different user who logs in to the device may have different access rights; and if a user logs in by default, the user has guest rights and can access only a public (open) resource).

In S127, the server-side device may generate a user interface that corresponds to the user interface presentation form and the specification that are determined in S121, and indicate, in this user interface, the resource that is determined in S124 or S126, so that the user who uses the terminal can perform an operation on the resource.

Return to FIG. 1. In S130, the server-side device may send the foregoing generated user interface to the terminal device, and the terminal device presents the user interface for the user to perform an operation.

Optionally, in this embodiment of the present invention, the method further includes:
receiving user operation information sent by the terminal device, where the user operation information is used to indicate an operation that is performed on the first user interface by the user who uses the terminal device;
determining a second user interface according to the user operation information and the terminal information; and
sending the second user interface to the terminal device.

Moreover, the user operation information includes touch operation information and/or user rights change information, where the touch operation information is used to indicate a touch operation that is performed by the user on the terminal device that presents the first user interface, and the user rights change information is used to indicate changed user rights; and
the determining a second user interface according to the user operation information and the terminal information specifically includes:
determining, according to the touch operation information, the operation that is performed by the user on the first user interface;
determining the second user interface according to the operation that is performed by the user on the first user interface; and/or
determining the second user interface according to the user rights change information, so that resource information displayed in the second user interface corresponds to changed user rights information, where the resource information is used to indicate a media resource for the user to use.

Specifically, for a terminal device that has a display component and supports a touch operation (the terminal device generally presents user interfaces of an image form and a video form, which is specifically determined according to a capability of the device), first, when a user touches a display screen, the terminal device generates a corresponding touch action or gesture according to the touch operation of the user, and records a relative position of the current operation relative to the entire screen; then, the terminal device sends, to a server-side device, information that is used to indicate the generated touch action or gesture, and the relative position of the touch action or gesture relative to the entire screen, and the server-side device converts the information into an operation that can be identified and used, and inserts the operation into an event response chain; then, the server-side device performs a corresponding response operation on the user interface according to an event in the event response chain; and finally, the server-side device sends a new user interface to the terminal device.

According to the method for determining a user interface in this embodiment of the present invention, a terminal device does not need to learn which specific component (button), on which a current operation is performed, of the user interface, but only needs to acquire a general touch operation on a screen and a relative position. All responses are determined and implemented by a server-side device.

For a terminal device that does not support a touch operation (the terminal device may present user interfaces of forms such as an image, a video, text, and audio, which is specifically determined according to a capability of the device), a presented user interface is used for prompting a user or for a user to browse content, and a real operation is implemented by means of a remote controller or by using a physical button of the device. First, after the terminal device detects an operation performed by using a physical button, a physical button operation event is converted into an agreed standard event that is recognized by a server-side device, and is sent to the server-side device. Then the server-side device inserts the received event into an event response chain. And then, the server-side device performs a corresponding response operation on the user interface according to the event in the event response chain. Finally, the server-side device sends a new user interface to the terminal device.

Moreover, in a case in which user rights change, the terminal device may send a user rights switch request to the server-side device. After receiving the request, the server-side device may re-filter, according to new user rights, the foregoing resource found by means of search, generate a new user interface according to a resource that is obtained after the re-filtering, and send the new user interface to the terminal device.

The following describes a process of determining a user interface separately by using a television set, and a sound box with a display screen as examples.

Example 1: a process of interaction between a television set (terminal device) and a server-side device:
1. The server-side device starts, and enables a device discovery service.
2. The television set starts, enables a device discovery service, and searches for a list of available server-side devices.
3. The television set selects a server-side device and attempts to establish a connection path. After the connection path is established, the television set sends content shown in Table 1 to the server-side device.

**Table 1**

| | |
|---|---|
| Device usage | Video playback, music playback, and image browsing |
| Device type | Device supporting video playback, device supporting image display, and device supporting audio output |
| Access rights | Visitor (guest) |

4. The server-side device may determine, according to a received connection request, whether to support this device (the server-side device may provide a video form user interface, an image form user interface, or an audio form user interface).
5. The server-side device may query, from the television set and according to a usage of the terminal device, a processing capability supported by the terminal device. For example, the server-side device may send content shown in Table 2 to the television set.

**Table 2**

| | |
|---|---|
| Video playback | Supported format? Maximum frame rate? |
| Image display | Supported format? Resolution? |
| Audio output | Supported format? |

Moreover, the television set may return content shown in Table 3 to the server-side device.

**Table 3**

| | | |
|---|---|---|
| Video playback | Supported format | avi, rmvb, ts, and mpeg4 |
| | Maximum frame rate | 50fps |
| Image display | Supported format | jpeg, png, gif, and bmp |
| | Resolution | 1280*720 |
| Audio output | Supported format | mp3 and wav |

6. The server-side device starts generating a user interface according to the foregoing input conditions.
6.1 According to a usage of the television set, the server-side device performs classification search, lists all video files, image files, and music files (audio files) that are stored in the service device, and in a search process, automatically filters out a file (for example, an application program) that is not within a usage range of the television set.
6.2 Access rights of the television set are guest rights. If all image files in a server are private photos of a host, an access restriction may be set for the image files according to setting of an administrator (host), so as to shield display of the image files.
6.3 The server side selects a form of displaying an image to present the user interface.
6.4 According to a processing capability of the television set, the server side further selects to present the user interface in a manner of an image whose format is png and size is 1280*720.
6.5 A content list found by means of search is added to the user interface to generate a final user interface, and a video list and a music list are presented on this interface for a user to select.

7. The television set displays a received user interface, and monitors a remote controller operation event. By using a remote controller, the user selects to browse a photo.
8. The television set sends, to the server side, a user operation event that is obtained by means of the listening, and the server side switches the displayed interface to an album browsing function, so as to present a photo in a form of playing a slide and update user interface data.
9. The server side returns to the operation in step 6.

It should be understood that, each of parameters and values listed above is only an embodiment of the present invention, and the present invention is not limited thereto.

Example 2: a process of interaction between a sound box with a display screen (terminal device) and a server-side device:
1. The server-side device starts, and enables a device discovery service.
2. The sound box starts, enables a device discovery service, and searches for a list of available server-side devices.
3. The sound box selects a server-side device and attempts to establish a connection path. After the connection path is established, the sound box sends content shown in Table 4 to the server side.

**Table 4**

| | |
|---|---|
| Device usage | Music playback |
| Device type | Device supporting image display and device supporting audio output |
| Access rights | Administrator (host) |

4. The server-side device may determine, according to a received connection request, whether to support this device (the server-side device may provide an image form user interface or an audio form user interface).
5. The server-side device may query, from the sound box and according to a usage of the terminal device, a processing capability supported by the terminal device. For example, the server-side device may send content shown in Table 5 to the sound box.

**Table 5**

| | |
|---|---|
| Image display | Supported format? Resolution? |
| Audio output | Supported format? |

The sound box may return content shown in Table 6 to the server-side device.

**Table 6**

| | | |
|---|---|---|
| Image display | Supported format | jpeg, png, gif, and bmp |
| | Resolution | 480*320 |
| Audio output | Supported format | mp3, wav, and ape |

6. The server side starts generating a user interface according to the foregoing input conditions.
6.1 According to a usage of the sound box, all music files (audio files) at the server side are searched for and listed, and an unsupported format is automatically filtered out in a search process according to a processing capability provided by the sound box.
6.2 Access rights of the sound box are administrator rights, and all audio files are presented.
6.3 The server side selects a form of displaying an image to present the user interface.
6.4 According to a device processing capability of the sound box, the server sidefurther selects to present a user interface operation interface in a manner of an image whose format is png and size is 480*320.
6.5 A content list found by means of search is added to the user interface operation interface to generate a final user interface, which can display related information such as song list information, a name and an artist of a currently played song.

7. The sound box displays a received user interface, and monitors a remote controller operation event. By using a button, a user selects to play a next song.
8. The sound box sends, to the server side, a user operation event that is obtained by means of the listening, and the server side switches to the next song for playback, and updates display of song information in the user interface and updates user interface data.
9. The server side returns to the operation in step 6.

It should be understood that, each of parameters and values listed above is only an embodiment of the present invention, and the present invention is not limited thereto.

According to the method for determining a user interface in this embodiment of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

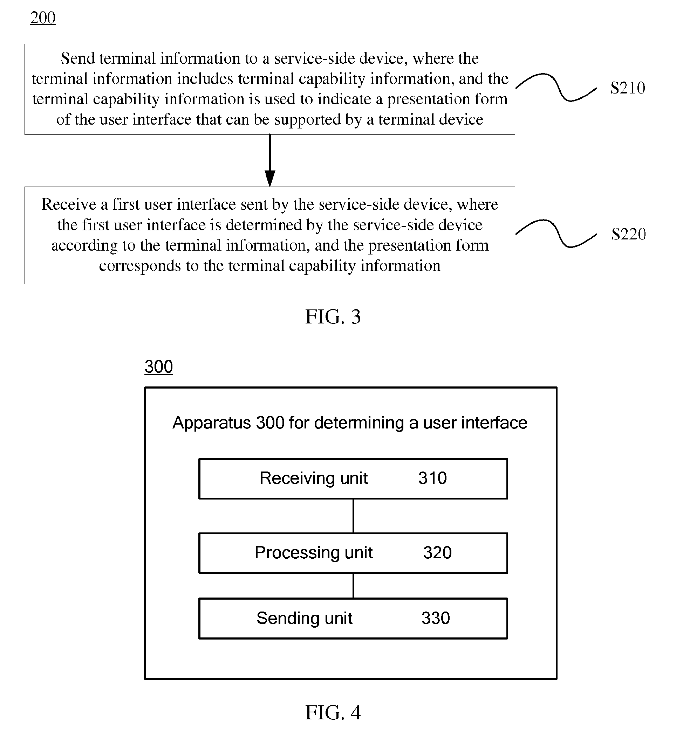

FIG. 3 is a schematic flowchart of a method 200 for determining a user interface according to an embodiment of the present invention from a perspective of a terminal device. As shown in FIG. 3, the method 200 includes:
S210: Send terminal information to a server-side device, where the terminal information includes terminal capability information, and the terminal capability information is used to indicate a presentation form of the user interface that can be supported by a terminal device.
S220: Receive a first user interface sent by the server-side device, where the first user interface is determined by the server-side device according to the terminal information, and the presentation form corresponds to the terminal capability information.

Specifically, in this embodiment of the present invention, a terminal device may be classified in advance in terms of a hardware presentation capability of a user interface. As an example instead of a limitation, the terminal device may be classified into multiple terminal types, that is, a device supporting video playback, a device supporting audio output, a device supporting image browsing, a device supporting text display, and the like. It may be specified that a different user interface presentation form is separately used for a different terminal type. For example, because a television set can play a video, the television set may be classified into the device supporting video playback, so as to determine that the television set supports a video form user interface. Furthermore, because the television set can also play audio, the television set may also be classified into the device supporting audio output, so as to determine that the television set supports a user interface (a voice prompt) of an audio form. Moreover, because the television set can also display an image, the television set may also be classified into the device supporting image browsing, so as to determine that the television set supports a user interface (a conventional user interface) of an image form. For another example, because a sound box can play audio, the sound box may also be classified into the device supporting audio output, so as to determine that the sound box supports a user interface (a voice prompt) of an audio form. In addition, if the sound box is equipped with a display screen such as liquid crystal or a light-emitting diode (LED, Light-Emitting Diode), the sound box can display text. Therefore, the sound box may also be classified into the device supporting text display, so as to determine that the sound box supports a user interface (displayed on a dot matrix or segment code LED) of a text form.

That is, in this embodiment of the present invention, according to a hardware presentation capability of a terminal device, the terminal device may be classified into one of or a combination of multiple of the following terminal types: a device supporting video playback, a device supporting audio output, a device supporting image browsing, a device supporting text display, and the like.

Accordingly, a user interface of multiple presentation forms may be set in advance, for example, a video form user interface (used by the device supporting video playback), an audio form user interface (used by the device supporting audio output), an image form user interface (used by the device supporting image browsing), and a text form user interface (used by the device supporting text display).

It should be understood that, in this embodiment of the present invention, a terminal device may be classified into one terminal type, and may also be classified into multiple device types, as long as the terminal device can indicate a user interface presentation form that is used by the terminal type, which is not limited in the present invention. Furthermore, for a terminal device that is classified into multiple device types, an appropriate user interface presentation form may be selected according to user preference. In addition, each of the terminal types listed above is only an embodiment of the present invention, and the present invention is not limited thereto.

Therefore, after a server-side device and a terminal device are started, a device discovery service may be enabled, so that the terminal device can search for a list of available server-side devices. The terminal device may select a server-side device from the foregoing list of server-side devices, and establish a connection path to the server-side device. After the connection path is established, in S110, the terminal device may send, to the server-side device, the terminal capability information that is used to indicate a type (a device supporting video playback, a device supporting audio output, a device supporting image browsing, a device supporting text display, and the like) to which the terminal device belongs. Then, the server-side device may generate a user interface that corresponds to a user interface presentation form that can be supported by the terminal device and corresponds to a display specification in case of the user interface presentation form.

Moreover, optionally, the server-side device may further query a display specification of the terminal device in a case of the user interface presentation form, for example, a format, resolution, and a frame rate of a video; a format and display resolution of an image; English, Chinese, and the like that are supported by text; and a format and a code rate of audio. It should be understood that, each of parameters listed above as display specifications is only an embodiment of the present invention, and the present invention is not limited thereto.

Optionally, in this embodiment of the present invention, the terminal information further includes terminal usage information and/or user rights information, where the terminal usage information is used to indicate a media type of a media resource that can be presented by the terminal device, and the user rights information is used to indicate rights of a user who uses the terminal device; and
the receiving a first user interface sent by the server-side device specifically includes:
receiving the first user interface sent by the server-side device, where resource information of the first user interface corresponds to the terminal usage information and/or the user rights information, where the resource information is used to indicate a media resource for the user to use.

Specifically, in this embodiment of the present invention, a terminal device may be classified in advance in terms of service usage. As an example instead of a limitation, the terminal device may be classified into multiple service usages, that is, the terminal device is used for audio playback, used for video playback, used for text reading, used for image browsing, and the like. It may be specified that a different media resource is separately used for a different service usage. For example, because a television set can play a video, it may be determined that the television set is used for video playback, and then a video type media resource (information about the resource is indicated in a user interface) may be provided for the television set. Furthermore, because the television set can also play audio, it may also be determined that the television set is used for audio playback, and then an audio type media resource (information about the resource is indicated in a user interface) may be provided for the television set. Moreover, because the television set can also display an image, it may also be determined that the television set is used for image browsing, and then an image type media resource (information about the resource is indicated in a user interface) may be provided for the television set. For another example, because a sound box can play audio, it may also be determined that the sound box is used for audio playback, and then an audio type media resource (information about the resource is indicated in a user interface) may be provided for the sound box.

Moreover, in this embodiment of the present invention, a media resource in a server may be classified in advance according to user setting and based on user rights, so that a different user can view different content (displayed in a user interface) after login. For example, a host may classify a media resource in a server-side device into private content and open content. In this way, when a guest pays a visit and logs in, by using a guest identity (rights), to a terminal device in a home of the host to browse content in the server-side device, only the open content may be indicated in a user interface. When the host logs in, by using a host identity (rights), to the terminal device to browse the content in the server-side device, the private content and the open content may be indicated in the user interface. That is, if rights of a user who logs in to the terminal device is different, a user interface determined by the server-side device is also different, different user interface operation rights (for example, only read-only operation rights is provided for a guest identity) and browsing rights (for example, only open content browsing rights is provided for a guest identity) are assigned.

According to the method for determining a user interface in this embodiment of the present invention, by using a media type of a media resource that can be presented by a terminal device, it can be ensured that a media resource indicated by the user interface can be used in the terminal device, thereby improving user experience. Moreover, by determining the user interface according to user rights of a user who uses the terminal device, a resource on a server-side device can be shared, and meanwhile data security and privacy of the user can be ensured.

Therefore, in S210, the terminal device may also send the terminal usage information and/or the user rights information to the server-side device, where the terminal usage information is used to indicate a media type of a media resource that can be presented by the terminal device, and the user rights information is used to indicate rights of a user who uses the terminal device. The server-side device selects, according to a terminal type to which the terminal device belongs, a user interface presentation form that is applicable to the terminal device. And, the server-side device may perform classification search according to the terminal usage information and/or the user rights information, list a media resource that is provided for the terminal device for playback, and generate a user interface that indicates information about the media resource.

That is, the server-side device may determine, according to terminal capability information reported by the terminal device, a type of the terminal device, and classify the terminal device into a device supporting video playback, a device supporting audio output, a device supporting image browsing, a device supporting text display, or the like. Moreover, the server-side device may further query (for example, by means of automatic report by the terminal device, by means of a report instruction sent to the terminal device, or the like) a display specification of the terminal device in a case of the user interface presentation form, for example, a format, resolution, and a frame rate of a video; a format and display resolution of an image; English, Chinese, and the like that are supported by text; and a format and a code rate of audio.

In addition, the server-side device may determine, according to the terminal usage information reported by the terminal device, a usage of the terminal device, and determine that the terminal device is used for audio playback, used for video playback, used for text reading, used for image browsing, or the like.

Moreover, the server-side device may search for, according to the usage of the terminal device, a resource that can be used by the terminal device.

In addition, the server-side device may determine, according to user rights information reported by the terminal device, user rights of a user who uses the terminal device, and determine whether the user who uses the terminal device is a host or a guest.

Furthermore, the server-side device may filter, according to the user rights of the user who uses the terminal device, a resource that is found by means of search in S125 (device access rights is set by a server side, and a terminal uses a different user who logs in to the device to represent different access rights; and if a user logs in by default, the user has guest rights and can access only a public (open) resource).

Finally, the server-side device may generate a user interface that corresponds to the user interface presentation form and the specification that are determined, and indicate, in this user interface, the foregoing determined resource, so that the user who uses the terminal can perform an operation the resource.

The server-side device may send the foregoing generated user interface to the terminal device. In S220, the terminal device receives the user interface and presents the user interface for the user to perform an operation.

Optionally, in this embodiment of the present invention, the method further includes:
acquiring user operation information, where the user operation information is used to indicate an operation that is performed on the first user interface by the user who uses the terminal device;
sending the user operation information to the server-side device; and
receiving a second user interface sent by the server-side device, where the second user interface is determined by the server-side device according to the user operation information and the terminal information.

Moreover, the user operation information includes touch operation information and/or user rights change information, where the touch operation information is used to indicate a touch operation that is performed by the user on the terminal device that presents the first user interface, and the user rights change information is used to indicate changed user rights.

Specifically, for a terminal device that has a display component and supports a touch operation (the terminal device generally presents user interfaces of an image form and a video form, which is specifically determined according to a capability of the device), first, when a user touches a display screen, the terminal device generates a corresponding touch action or gesture according to the touch operation of the user, and records a relative position of the current operation relative to the entire screen; then, the terminal device sends, to a server-side device, information that is used to indicate the generated touch action or gesture, and the relative position of the touch action or gesture relative to the entire screen, and the server-side device converts the information into an operation that can be identified and used, and inserts the operation into an event response chain; then, the server-side device performs a corresponding response operation on the user interface according to an event in the event response chain; and finally, the server-side device sends a new user interface to the terminal device.

According to the method for determining a user interface in this embodiment of the present invention, a terminal device does not need to learn which specific component (button), on which a current operation is performed, of the user interface, but only needs to acquire a general touch operation on a screen and a relative position. All responses are determined and implemented by a server-side device.

For a terminal device that does not support a touch operation (the terminal device may present user interfaces of forms such as an image, a video, text, and audio, which is specifically determined according to a capability of the device), a presented user interface is used for prompting a user or for a user to browse content, and a real operation is implemented by means of a remote controller or by using a physical button of the device. First, after the terminal device detects an operation performed by using a physical button, a physical button operation event is converted into an agreed standard event that is recognized by a server-side device, and is sent to the server-side device. Then the server-side device inserts the received event into an event response chain. And then, the server-side device performs a corresponding response operation on the user interface according to the event in the event response chain. Finally, the server-side device sends a new user interface to the terminal device.

Moreover, in a case in which user rights change, the terminal device may send a user rights switch request to the server-side device. After receiving the request, the server-side device may re-filter, according to new user rights, the foregoing resource found by means of search, generate a new user interface according to the resource that is obtained after the re-filtering, and send the new user interface to the terminal device.

According to the method for determining a user interface in this embodiment of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

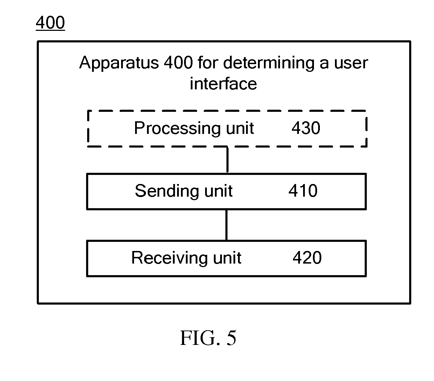

The foregoing describes the method for determining a user interface according to the embodiment of the present invention in detail with reference to FIG. 1 to FIG. 3. The following describes an apparatus for determining a user interface according to an embodiment of the present invention in detail with reference to FIG. 4 and FIG. 5.

FIG. 4 shows a schematic block diagram of an apparatus 300 for determining a user interface according to an embodiment of the present invention. As shown in FIG. 4, the apparatus 300 includes:
a receiving unit 310, configured to receive terminal information sent by a terminal device, where the terminal information includes terminal capability information, and the terminal capability information is used to indicate a presentation form of the user interface that can be supported by the terminal device; and transmit the terminal information to a processing unit 320;
the processing unit 320, configured to acquire the terminal information from the receiving unit 310, determine a first user interface according to the terminal information, so that a presentation form of the first user interface corresponds to the terminal capability information; and transmit the first user interface to a sending unit 330; and
the sending unit 330, configured to acquire the first user interface from the processing unit 320, and send the first user interface to the terminal device.

Optionally, in this embodiment of the present invention, the terminal information further includes terminal usage information and/or user rights information, where the terminal usage information is used to indicate a media type of a media resource that can be presented by the terminal device, and the user rights information is used to indicate user rights of a user who uses the terminal device; and
the processing unit 320 is further configured to determine the first user interface according to the terminal information, so that resource information displayed in the first user interface corresponds to the terminal usage information and/or the user rights information, where the resource information is used to indicate a media resource for the user to use.

According to the apparatus for determining a user interface in this embodiment of the present invention, by using a media type of a media resource that can be presented by a terminal device, it can be ensured that a media resource indicated by the user interface can be used in the terminal device, thereby improving user experience. Moreover, by determining the user interface according to user rights of a user who uses the terminal device, a resource on a server-side device can be shared, and meanwhile data security and privacy of the user can be ensured.

Optionally, in this embodiment of the present invention, the receiving unit 310 is further configured to receive user operation information sent by the terminal device, where the user operation information is used to indicate an operation that is performed on the first user interface by the user who uses the terminal device;
the processing unit 320 is further configured to determine a second user interface according to the user operation information and the terminal information; and
the sending unit 330 is further configured to send the second user interface to the terminal device.

Moreover, the user operation information includes touch operation information and/or user rights change information, where the touch operation information is used to indicate a touch operation that is performed by the user on the terminal device that presents the first user interface, and the user rights change information is used to indicate changed user rights; and
the processing unit 320 is further configured to determine, according to the touch operation information, the operation that is performed by the user on the first user interface; and/or
configured to determine the second user interface according to the user rights change information, so that resource information displayed in the second user interface corresponds to changed user rights information, where the resource information is used to indicate a media resource for the user to use.

According to the apparatus for determining a user interface in this embodiment of the present invention, a terminal device does not need to learn which specific component (button), on which a current operation is performed, of the user interface, but only needs to acquire a general touch operation on a screen and a relative position. All responses are determined and implemented by a server-side device.

According to the apparatus for determining a user interface in this embodiment of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

The apparatus 300 for determining a user interface according to this embodiment of the present invention may correspond to the server-side device in the method in the embodiment of the present invention. Moreover, each unit and module in the apparatus 300 for determining a user interface, and the foregoing other operations and/or functions are separately intended to implement a corresponding process of the method 100 shown in FIG. 1 and FIG. 2. For brevity, details are not described herein again.

FIG. 5 shows a schematic block diagram of an apparatus 400 for determining a user interface according to an embodiment of the present invention. As shown in FIG. 5, the apparatus 400 includes:
a sending unit 410, configured to send terminal information to a server-side device, where the terminal information includes terminal capability information, and the terminal capability information is used to indicate a presentation form of the user interface that can be supported by a terminal device; and
a receiving unit 420, configured to receive a first user interface sent by the server-side device, where the first user interface is determined by the server-side device according to the terminal information sent by the sending unit 410, and the presentation form corresponds to the terminal capability information.

Optionally, in this embodiment of the present invention, the terminal information sent by the sending unit 410 further includes terminal usage information and/or user rights information, where the terminal usage information is used to indicate a media type of a media resource that can be presented by the terminal device, and the user rights information is used to indicate rights of a user who uses the terminal device; and
resource information of the first user interface that is received by the receiving unit 420 corresponds to the terminal usage information and/or the user rights information, where the resource information is used to indicate a media resource for the user to use.

According to the apparatus for determining a user interface in this embodiment of the present invention, by using a media type of a media resource that can be presented by a terminal device, it can be ensured that a media resource indicated by the user interface can be used in the terminal device, thereby improving user experience. Moreover, by determining the user interface according to user rights of a user who uses the terminal device, a resource on a server-side device can be shared, and meanwhile data security and privacy of the user can be ensured.

Optionally, in this embodiment of the present invention, the apparatus further includes:
a processing unit 430, configured to acquire user operation information, where the user operation information is used to indicate an operation that is performed on the first user interface by the user who uses the terminal device; and transmit the user operation information to the sending unit;
where the sending unit 410 is further configured to acquire the user operation information from the processing unit 430, and send the user operation information to the server-side device; and
the receiving unit 420 is further configured to receive a second user interface sent by the server-side device, where the second user interface is determined by the server-side device according to the user operation information and the terminal information that are sent by the sending unit 410.

Moreover, the user operation information acquired by the processing unit 430 includes touch operation information and/or user rights change information, where the touch operation information is used to indicate a touch operation that is performed by the user on the terminal device that presents the first user interface, and the user rights change information is used to indicate changed user rights.

According to the apparatus for determining a user interface in this embodiment of the present invention, a terminal device does not need to learn which specific component (button), on which a current operation is performed, of the user interface, but only needs to acquire a general touch operation on a screen and a relative position. All responses are determined and implemented by a server-side device.

According to the apparatus for determining a user interface in this embodiment of the present invention, by determining a user interface according to a presentation form of a user interface that can be supported by a terminal device, it can be ensured that the user interface is applicable to the terminal device, thereby meeting a differentiation requirement of the terminal device on a user interface presentation form.

The apparatus 400 for determining a user interface according to this embodiment of the present invention may correspond to the terminal device in the method in the embodiment of the present invention. Moreover, each unit and module in the apparatus 400 for determining a user interface, and the foregoing other operations and/or functions are separately intended to implement a corresponding process of the method 200 shown in FIG. 3. For brevity, details are not described herein again.

It should be understood that in this specification, a term "and/or" is only an association for describing associated objects, indicating that three relationships may exist, for example, A and/or B, which may indicate three cases: A exists independently; both A and B exist; and B exists independently. In addition, in this specification, a character "/" generally indicates an "or" relationship between a former and a latter associated objects.

It should be understood that in the embodiments of the present invention, a size of a sequence number in the foregoing processes does not indicate an execution sequence, and an execution sequence of each process shall be determined by its function and internal logic, and shall not be construed as any limitation on an implementation process of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of the present invention.

It may be clearly understood by a person skilled in the art that, for ease and brevity of description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be another division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to an actual requirement to achieve the purposes of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining a user interface, wherein the method comprises:
receiving terminal information sent by a terminal device, wherein the terminal information comprises terminal capability information, and the terminal capability information is used to indicate a presentation form of the user interface that can be supported by the terminal device;
determining a first user interface according to the terminal information, so that a presentation form of the first user interface corresponds to the terminal capability information; and
sending the first user interface to the terminal device.

2. The method according to claim 1, wherein the terminal information further comprises terminal usage information and/or user rights information, wherein the terminal usage information is used to indicate a media type of a media resource that can be presented by the terminal device, and the user rights information is used to indicate user rights of a user who uses the terminal device; and
the determining a first user interface according to the terminal information specifically comprises:
determining the first user interface according to the terminal information, so that resource information displayed in the first user interface corresponds to the terminal usage information and/or the user rights information, wherein the resource information is used to indicate a media resource for the user to use.

3. The method according to claim 1 or 2, wherein the method further comprises:
receiving user operation information sent by the terminal device, wherein the user operation information is used to indicate an operation that is performed on the first user interface by the user who uses the terminal device;
determining a second user interface according to the user operation information and the terminal information; and
sending the second user interface to the terminal device.

4. The method according to claim 3, wherein the user operation information comprises touch operation information and/or user rights change information, wherein the touch operation information is used to indicate a touch operation that is performed by the user on the terminal device that presents the first user interface, and the user rights change information is used to indicate changed user rights; and
the determining a second user interface according to the user operation information and the terminal information specifically comprises:
determining, according to the touch operation information, the operation that is performed by the user on the first user interface;
determining the second user interface according to the operation that is performed by the user on the first user interface; and/or
determining the second user interface according to the user rights change information, so that resource information displayed in the second user interface corresponds to changed user rights information, wherein the resource information is used to indicate a media resource for the user to use.

5. A method for determining a user interface, wherein the method comprises:
sending terminal information to a server-side device, wherein the terminal information comprises terminal capability information, and the terminal capability information is used to indicate a presentation form of the user interface that can be supported by a terminal device; and
receiving a first user interface sent by the server-side device, wherein the first user interface is determined by the server-side device according to the terminal information, and the presentation form corresponds to the terminal capability information.

6. The method according to claim 5, wherein the terminal information further comprises terminal usage information and/or user rights information, wherein the terminal usage information is used to indicate a media type of a media resource that can be presented by the terminal device, and the user rights information is used to indicate rights of a user who uses the terminal device; and
the receiving a first user interface sent by the server-side device specifically comprises:
receiving the first user interface sent by the server-side device, wherein resource information of the first user interface corresponds to the terminal usage information and/or the user rights information, wherein the resource information is used to indicate a media resource for the user to use.

7. The method according to claim 5 or 6, wherein the method further comprises:
acquiring user operation information, wherein the user operation information is used to indicate an operation that is performed on the first user interface by the user who uses the terminal device;
sending the user operation information to the server-side device; and
receiving a second user interface sent by the server-side device, wherein the second user interface is determined by the server-side device according to the user operation information and the terminal information.

8. The method according to claim 7, wherein the user operation information comprises touch operation information and/or user rights change information, wherein the touch operation information is used to indicate a touch operation that is performed by the user on the terminal device that presents the first user interface, and the user rights change information is used to indicate changed user rights.

9. An apparatus for determining a user interface, wherein the apparatus comprises:
a receiving unit, configured to receive terminal information sent by a terminal device, wherein the terminal information comprises terminal capability information, and the terminal capability information is used to indicate a presentation form of the user interface that can be supported by the terminal device; and transmit the terminal information to a processing unit;
the processing unit, configured to acquire the terminal information from the receiving unit; determine a first user interface according to the terminal information, so that a presentation form of the first user interface corresponds to the terminal capability information; and transmit the first user interface to a sending unit; and
the sending unit, configured to acquire the first user interface from the processing unit, and send the first user interface to the terminal device.

10. The apparatus according to claim 9, wherein the terminal information further comprises terminal usage information and/or user rights information, wherein the terminal usage information is used to indicate a media type of a media resource that can be presented by the terminal device, and the user rights information is used to indicate user rights of a user who uses the terminal device; and
the processing unit is further configured to determine the first user interface according to the terminal information, so that resource information displayed in the first user interface corresponds to the terminal usage information and/or the user rights information, wherein the resource information is used to indicate a media resource for the user to use.

11. The apparatus according to claim 9 or 10, wherein the receiving unit is further configured to receive user operation information sent by the terminal device, wherein the user operation information is used to indicate an operation that is performed on the first user interface by the user who uses the terminal device;
the processing unit is further configured to determine a second user interface according to the user operation information and the terminal information; and
the sending unit is further configured to send the second user interface to the terminal device.

12. The apparatus according to claim 11, wherein the user operation information comprises touch operation information and/or user rights change information, wherein the touch operation information is used to indicate a touch operation that is performed by the user on the terminal device that presents the first user interface, and the user rights change information is used to indicate changed user rights; and
the processing unit is further configured to determine, according to the touch operation information, the operation that is performed by the user on the first user interface; and/or
configured to determine the second user interface according to the user rights change information, so that resource information displayed in the second user interface corresponds to changed user rights information, wherein the resource information is used to indicate a media resource for the user to use.

13. An apparatus for determining a user interface, wherein the apparatus comprises:
a sending unit, configured to send terminal information to a server-side device, wherein the terminal information comprises terminal capability information, and the terminal capability information is used to indicate a presentation form of the user interface that can be supported by a terminal device; and
a receiving unit, configured to receive a first user interface sent by the server-side device, wherein the first user interface is determined by the server-side device according to the terminal information sent by the sending unit, and the presentation form corresponds to the terminal capability information.

14. The apparatus according to claim 13, wherein the terminal information sent by the sending unit further comprises terminal usage information and/or user rights information, wherein the terminal usage information is used to indicate a media type of a media resource that can be presented by the terminal device, and the user rights information is used to indicate rights of a user who uses the terminal device; and
resource information of the first user interface that is received by the receiving unit corresponds to the terminal usage information and/or the user rights information, wherein the resource information is used to indicate a media resource for the user to use.

15. The apparatus according to claim 13 or 14, wherein the apparatus further comprises:
a processing unit, configured to acquire user operation information, wherein the user operation information is used to indicate an operation that is performed on the first user interface by the user who uses the terminal device; and transmit the user operation information to the sending unit;
wherein the sending unit is further configured to acquire the user operation information from the processing unit, and send the user operation information to the server-side device; and
the receiving unit is further configured to receive a second user interface sent by the server-side device, wherein the second user interface is determined by the server-side device according to the user operation information and the terminal information that are sent by the sending unit.

16. The apparatus according to claim 7, wherein the user operation information acquired by the processing unit comprises touch operation information and/or user rights change information, wherein the touch operation information is used to indicate a touch operation that is performed by the user on the terminal device that presents the first user interface, and the user rights change information is used to indicate changed user rights.
